# EUROPEAN PATENT APPLICATION

(11) **EP 4 186 722 A1**
(43) Date of publication of application: **31.05.2023**
(21) Application number: 21211537.2
(22) Date of filing: 30.11.2021
(51) Int. Cl.: B60H 1/00, B60H 1/22, F24H 3/04, H05B 3/34

(54) **HEATING STRUCTURE**

(71) Applicant: VALEO SYSTEMES THERMIQUES, 78320 Le Mesnil Saint-Denis (FR)
(72) Inventor: VILLINGER, Markus, 6142 Mieders (AT)
(74) Representative: Valeo Systèmes Thermiques

(57) **Abstract**

Heating structure (1), in particular a flexible structure, to be installed inside a passenger cabin of a vehicle, the heating structure (1) being in particular a radiant panel, the heating structure (1) comprising at least one resistive strip (2) configured to provide heat when an electric current flows through the resistive strip (2), and at least two electrodes arranged to be in electrical contact with the resistive strip (2) so as to cause an electrical current to flow through the resistive strip (2), wherein the resistive strip (2) comprises a hole (5) that defines a passage (6) for a fixing element (7), such as a bolt or a screw, and the passage (6) has a shape selected so that the fixing element (7) is electrically insulated from the resistive strip (2).

## Description

The present invention relates to a heating structure to be installed inside a passenger cabin of a vehicle, for example a car, this heating structure being in particular a radiant panel.

Heating structures play an active role in the comfort in a vehicle cabin. The surface of the structure heats the passengers by infrared radiation while heating the air inside the cabin by convection or by contact (for example in the case of an armrest). They have shapes and dimensions adapted to their location in the vehicle. The heating structures can be integrated in a seat, a dashboard, a roof, a pillar, an armrest, a door panel, etc. A heating structure can therefore be seen as an interface whose main function is to ensure thermal comfort within the vehicle cabin.

A heating structure, in particular a radiant panel, is a device generally comprising an electrical circuit configured to deliver heat by Joule effect by supplying electric current to resistive conducting elements.

The present invention aims to improve the assembly of a heating structure with a component.

The invention thus relates to a heating structure, in particular a flexible structure, to be installed inside a passenger cabin of a vehicle, this heating structure being in particular a radiant panel, the heating structure comprising:
- at least one resistive strip configured to provide heat when an electric current flows through the resistive strip,
- at least two electrodes arranged to be in electrical contact with the resistive strip so as to cause an electrical current to flow through the resistive strip,
characterized in that the resistive strip comprises a hole that defines a passage for a fixing element such as a bolt or a screw, the passage having a shape selected so that the fixing element is electrically insulated from the resistive strip.

The invention makes it possible to easily assemble the heating structure to a component, in particular of a vehicle interior, by means of a screw or bolt. The passage for the fixing element is insulated from the resistive strip so as to avoid an electrical short circuit.

The invention also enables to manage compact design since it allows fixing elements to be placed through the resistive strip, within the contour of the resistive strip.

According to one aspect of the invention, the hole has a circular shape and the fixing element has a diameter smaller than the diameter of the hole.

According to one aspect of the invention, the strip has a plurality of holes defining a plurality of passages for a plurality of fixing element.

According to one aspect of the invention, the hole is at a distance from the edges of the strip.

According to one aspect of the invention, the strip is formed by a coating of a resistive material, particularly in the form of a paint of a resistive material or a print of a resistive material.

According to one aspect of the invention, the hole corresponds to a zone that is not covered by the resistive material.

According to one aspect of the invention, said heating structure comprises a support configured to carry or integrate the electrodes and the resistive strip, the support having a cut located in the hole and being part of the passage for the fixing element.

According to one aspect of the invention, the material of the support is chosen in the following list: a non-woven textile, a fabric, a stretchable textile, a stretchable knitted fabric.

The invention also relates to a heating assembly to be installed in a vehicle passenger cabin, characterized in that it comprises a heating structure as disclosed above and at least one additional part, the heating structure being assembled with the additional part by means of at least one fixing element located in the passage of the heating element.

According to one aspect of the invention, the assembly comprises at least one additional layer assembled with the heating structure, said additional layer is selected from: a thermal insulation layer and/or a protective layer of the heating structure.

The invention also relates to a vehicle interior component comprising a part, such as a door, an underbody, a roof, a dashboard element such as a glove box, a seat, a seat element such as a headrest or a seat back, a footwell or an armrest, characterized in that said vehicle interior component comprises a heating structure as disclosed above, in which the heating structure is assembled with the part by means of at least one fixing element located in the passage of the heating element.

According to one aspect of the invention, the fixing element cooperates with the part of the interior component.

According to one aspect of the invention, the structure comprises a plurality of strips of different shapes and/or different dimensions.

According to one aspect of the invention, the electrodes are arranged in an array which comprises main electrodes and secondary electrodes connected to the main electrodes.

According to one aspect of the invention, the main electrodes are parallel to each other and the secondary electrodes are perpendicular to the main electrodes.

According to one aspect of the invention, the secondary electrodes alternately connect to one and the other of the main electrodes, and are arranged in the gap between the main electrodes.

According to one aspect of the invention, the main electrodes and the secondary electrodes are straight.

According to one aspect of the invention, the electrodes and/or the resistive strips can be made by screen printing, offset printing, inkjet printing, additive manufacturing, hot stamping and transfer or electrodeposition.

According to one aspect of the invention, the support is made of a flexible material, capable of taking a predetermined shape by deformation, this support being in particular extensible. The material of the support can be chosen in a non-limiting way among: a non-woven textile, a fabric, or a stretchable textile or a stretchable knitted fabric.

According to one aspect of the invention, the elements of the heating structure, namely the support, the resistive strips and the electrodes, form a flexible and extensible assembly.

When the support is a fabric, the stretchability can be achieved either by the arrangement of the woven structure, i.e., by the weaving technique, or by the intrinsic stretchability of the yarns used for weaving.

According to one aspect of the invention, the non-woven textile may comprise a blend of polypropylene fibers and/or polyester fibers. Other fibers may be used, such as natural fibers.

According to one aspect of the invention, the structure comprises a backing made of a thermoplastic material. The thermoplastic material is preferably selected from the following list: a polycarbonate and/or polyethylene terephthalate and/or polymethyl methacrylate and/or polybuthylene terephthalate and/or a polyamide material and/or a polyolefin and/or a copolymer material and/or an elastomer material.

According to an aspect of the invention, the heating structure comprises at least one additional layer.

According to an aspect of the invention, said at least one additional layer is selected from: a thermal insulation layer and/or a layer for protecting the heating structure. The thermal insulation layer may, for example, be a layer of material having thermal insulation properties (e.g., felt or felt strip, polyurethane foam, polyethylene foam) and allowing to avoid heat dissipation to areas not allowing to heat the passenger cabin.

According to one aspect of the invention, the heating structure is interposed between the thermal insulation layer and the protective layer.

According to one aspect of the invention, the protective layer faces the vehicle interior and the thermal insulation layer faces the vehicle exterior. In this arrangement, a majority of the heat generated by the resistive layer of the radiant panel is dissipated to the passenger cabin of the vehicle, with the thermal insulation layer limiting the amount of heat dissipated to the exterior of the passenger cabin.

According to one aspect of the invention, the protective layer has a function of dressing or decorating the heating structure. The purpose of such a function is to give an aesthetic appearance to the heating structure and thus allow it to be integrated into the vehicle interior, in particular on a door panel or on a roof. The protective layer can be made of fabric, leather, wood, paint or any other material allowing the aesthetic insertion of the heating structure in the passenger cabin. The layer is thus arranged to impart a fabric appearance, a leather appearance, a wood appearance, or any other appearance deemed necessary to aesthetically integrate the heating structure into the passenger cabin.

According to one aspect of the invention, the thermal insulation layer has a mechanical holding function with respect to the heating structure. In this arrangement, this layer is arranged to allow the deposition and retention of the heating structure on the thermal insulation layer. The thermal insulation layer comprises, for example, a material having electrical insulation properties, high adhesion and/or low roughness. Such a material is for instance selected from polyimide such as Kapton, or polyethylene terephthalate such as Mylar.

Further features, details and advantages of the invention will become apparent from the description given below in relation to the drawings in which:
- Figure 1 is a schematic representation of an example of a heating structure according to the present invention,
- Figures 2 is a schematic representation of a component having the heating structure of Figure 1, in cross section,
- Figures 3 is a schematic representation of a detail of the heating structure according to Figure 1,
- Figure 4 is a schematic representation in cross section of the heating structure according to Figure 1.

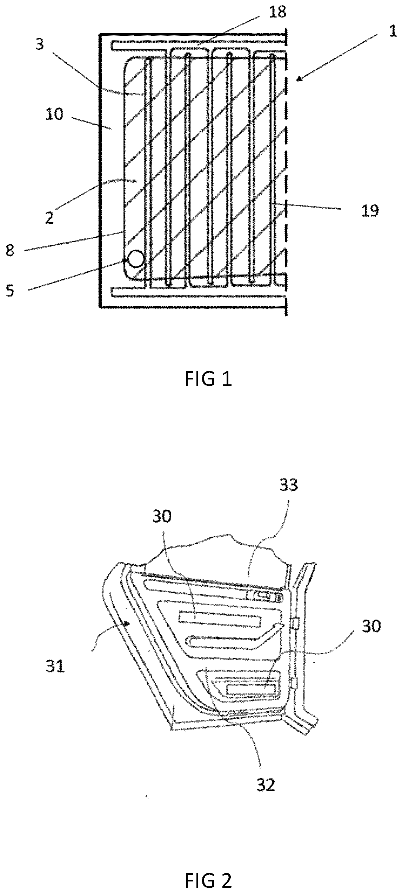

Figure 1 shows a heating structure 1 to be installed inside a passenger cabin of a vehicle, this heating structure 1 forming a radiant panel, the heating structure 1 comprising:
- a resistive strips 2 configured to provide heat when an electric current flows through the resistive strip 2,
- an array of electrodes 3 arranged to be in electrical contact with the resistive strip 2 so as to cause an electrical current to flow through the resistive strip 2.

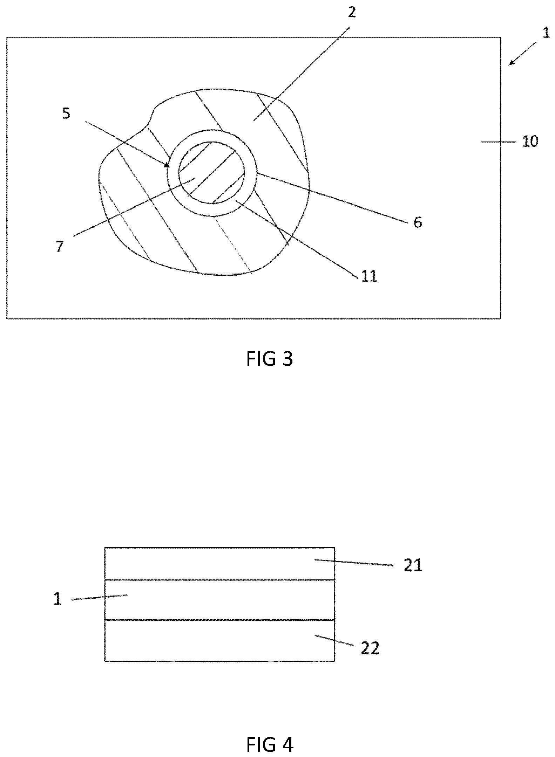

As visible in figures 1 and 3, the resistive strip 2 comprises a hole 5 that defines a passage 6 for a fixing element 7 such as a bolt or a screw, the passage 6 having a shape selected so that the fixing element 7 is electrically insulated from the resistive strip 2.

The hole 5 has a circular shape and the fixing element 7 has a diameter smaller than the diameter of the hole 5.

The resistive strip 2 may have a plurality of holes defining a plurality of passages for a plurality of fixing element.

The hole 5 is at a distance from the edges 8 of the strip 2.

The strip 2 is formed by a coating of a resistive material, particularly in the form of a paint of a resistive material or a print of a resistive material.

The hole 5 corresponds to a zone that is not covered by the resistive material.

The heating structure 1 comprises a support 10 configured to carry or integrate the electrodes 3 and the resistive strip 2.

The support has a cut 11 located in the hole 5 and being part of the passage 6 for the fixing element 7.

The material of the support 11 is chosen in the following list: a non-woven textile, a fabric, a stretchable textile, a stretchable knitted fabric.

A heating assembly 30 to be installed in a vehicle passenger cabin comprises the heating structure 1 as disclosed above and at least one additional part 32, the heating structure 1 being assembled with the additional part 32 by means of fixing elements 7 located in the passages 6 of the heating element 1.

The assembly 30 is illustrated in Figure 2 and is a component configured to be integrated into a door 31. The number of assemblies 30 can be two or higher.

The door comprises a window 33.

The assembly 30 comprises at least one additional layer assembled with the heating structure 1, said additional layer is selected from: a thermal insulation layer and/or a protective layer of the heating structure.

The electrode array 3 comprises main electrodes 18 and secondary electrodes 19 connected to the main electrodes.

The main electrodes 18 are parallel to each other and the secondary electrodes 19 are perpendicular to the main electrodes.

The secondary electrodes 19 alternately connect to one and the other of the main electrodes 18, and are arranged in the gap between the main electrodes.

The main electrodes 18 and the secondary electrodes 19 are straight.

The support 10 is made of a flexible material, capable of taking a predetermined shape by deformation, this support being in particular extensible. The material of the support can be chosen in a non-limiting way among: a non-woven textile, a fabric, or a stretchable textile or a stretchable knitted fabric.

The non-woven textile may comprise a blend of polypropylene fibers and/or polyester fibers. Other fibers may be used, such as natural fibers.

An additional layer can be a backing made of a thermoplastic material. The thermoplastic material is preferably selected from the following list: a polycarbonate and/or polyethylene terephthalate and/or polymethyl methacrylate and/or polybuthylene terephthalate and/or a polyamide material and/or a polyolefin and/or a copolymer material and/or an elastomer material.

In the present embodiment, additional layers 21, 22 are arranged to cover the heating structure 1 as visible on Figure 4.

An additional layer is a thermal insulation layer 21.

Another additional layer is a layer 22 for protecting the heating structure 1.

The thermal insulation layer 21 may, for example, be a layer of material having thermal insulation properties (e.g., felt or felt strip, polyurethane foam, polyethylene foam) and allowing to avoid heat dissipation to areas not allowing to heat the passenger cabin.

The heating structure 1 is interposed between the thermal insulation layer 21 and the protective layer 22, as illustrated in figure 4.

The protective layer 22 faces the vehicle interior and the thermal insulation layer 21 faces the vehicle exterior. In this arrangement, a majority of the heat generated by the resistive strips 2 of the radiant panel is dissipated to the passenger cabin of the vehicle, with the thermal insulation layer 21 limiting the amount of heat dissipated to the exterior of the passenger cabin.

The protective layer 22 has a function of dressing or decorating the heating structure. The purpose of such a function is to give an aesthetic appearance to the heating structure and thus allow it to be integrated into the vehicle interior, in particular on a door panel or on a roof. The protective layer can be made of fabric, leather, wood, paint or any other material allowing the aesthetic insertion of the heating structure in the passenger cabin. The layer is thus arranged to impart a fabric appearance, a leather appearance, a wood appearance, or any other appearance deemed necessary to aesthetically integrate the heating structure into the passenger cabin.

According to one aspect of the invention, the thermal insulation layer 21 has a mechanical holding function with respect to the heating structure. In this arrangement, this layer is arranged to allow the deposition and retention of the heating structure on the thermal insulation layer. The thermal insulation layer comprises, for example, a material having electrical insulation properties, high adhesion and/or low roughness. Such a material is for instance selected from polyimide such as Kapton, or polyethylene terephthalate such as Mylar.

## Claims

1. A heating structure (1), in particular a flexible structure, to be installed inside a passenger cabin of a vehicle, this heating structure being in particular a radiant panel, the heating structure (1) comprising:
- at least one resistive strip (2) configured to provide heat when an electric current flows through the resistive strip,
- at least two electrodes (3) arranged to be in electrical contact with the resistive strip so as to cause an electrical current to flow through the resistive strip,
**characterized in that** the resistive strip comprises a hole (5) that defines a passage (6) for a fixing element such as a bolt or a screw, the passage having a shape selected so that the fixing element (7) is electrically insulated from the resistive strip.

2. Heating structure according to claim 1, **characterized in that** the hole has a circular shape and the fixing element has a diameter smaller than the diameter of the hole (5).

3. The heating structure according to any preceding claims, **characterized in that** the strip has a plurality of holes (5) defining a plurality of passages for a plurality of fixing element.

4. The heating structure according to any preceding claims, **characterized in that** the hole (5) is at a distance from the edges of the strip.

5. The heating structure according to any preceding claims, **characterized in that** the strip (2) is formed by a coating of a resistive material, particularly in the form of a paint of a resistive material or a print of a resistive material.

6. The heating structure according to any preceding claims, **characterized in that** the hole corresponds to a zone that is not covered by the resistive material.

7. The heating structure according to any preceding claims, **characterized in that** said heating structure (1) comprises a support configured to carry or integrate the electrodes and the resistive strip, the support having a cut located in the hole and being part of the passage for the fixing element.

8. The heating structure according to any preceding claims, **characterized in that** the material of the support is chosen in the following list: a non-woven textile, a fabric, a stretchable textile, a stretchable knitted fabric.

9. A heating assembly (30) to be installed in a vehicle passenger cabin, **characterized in that** it comprises a heating structure according to any one of the preceding claims and at least one additional part, the heating structure being assembled with the additional part by means of at least one fixing element (7) located in the passage of the heating element.

10. The heating assembly (2) according to claim 9, comprising at least one additional layer assembled with the heating structure, said additional layer is selected from: a thermal insulation layer and/or a protective layer of the heating structure.

11. A vehicle interior component (30) comprising a part, such as a door, an underbody, a roof, a dashboard element such as a glove box, a seat, a seat element such as a headrest or a seat back , a footwell or an armrest, **characterized in that** said vehicle interior component comprises a heating structure according to any one of claims 1 to 8, in which the heating structure is assembled with the part by means of at least one fixing element located in the passage of the heating element.

12. A vehicle interior component according to the preceding claim, wherein the fixing element cooperates with the part of the interior component.
